# EUROPEAN PATENT APPLICATION

(11) **EP 4 304 191 A2**
(43) Date of publication of application: **10.01.2024**
(21) Application number: 23177640.2
(22) Date of filing: 06.06.2023
(51) Int. Cl.: H04N 23/698, B60R 1/25, G08G 1/16, H04N 7/18, G06V 20/58

(54) **CAMERA SYSTEM, METHOD FOR CONTROLLING THE SAME, AND COMPUTER PROGRAM**

(30) Priority: 05.07.2022 JP 2022108513
(71) Applicant: CANON KABUSHIKI KAISHA, Tokyo 146-8501 (JP)
(72) Inventor: IKARI, Daiki, Tokyo, 146-8501 (JP)
(74) Representative: Canon Europe Limited

(57) **Abstract**

A camera system includes a clipping unit configured to clip, from an image captured by an imaging unit, a side rear area of a vehicle that is a part of the captured image, a display unit configured to display an image of the side rear area of the vehicle, and a detection unit configured to detect an object in a blind spot area of the vehicle that is a part of the captured image and is determined in advance. The clipping unit further clips a clipping area from the captured image so as to include an area where the object is detected. The camera system further includes a generation unit configured to generate a display image based on the side rear area of the vehicle and the clipping area. The display unit further displays the display image.

## Description

### BACKGROUND OF THE INVENTION

### Field of the Invention

The present invention relates to a camera system that assists an operation to drive a moving object.

### Description of the Related Art

A conventional vehicle such as an automobile includes door mirrors (side mirrors) for checking the left and right rear of the vehicle. In recent years, a digital mirror technique has been known as a substitute for the conventional door mirrors for the purpose of improving visibility in bad weather and reducing blind spots. The digital mirror technique enables capturing images of the surroundings of the vehicle using cameras (hereinafter referred to as "side cameras") and displaying the captured images on a monitor.

In this case, the side cameras can have a wide variety of roles such as assisting a lane change and checking whether there is a person or an object on the sides of the vehicle in addition to checking the left and right rear of the vehicle. To play such a wide variety of roles, it is desirable that the side cameras be capable of achieving both the capturing of images at wide viewing angles and the capturing of images of the left and right rear at a high resolution. More specifically, it is desirable to use, in each of the side cameras, an optical system having a wide viewing angle that enables capturing images in a range from the traveling direction of the vehicle to the rear direction of the vehicle, and also capable of acquiring high-resolution images in the rear direction of the vehicle.

Using such a side camera, it is possible to detect another vehicle on an adjacent lane on either side of the vehicle, and change a display on a digital mirror monitor. In this manner, only in a case where attention is to be paid to the side of the vehicle, the display is changed to wide-angle display to reduce blind spots, whereby the vehicle's driver can direct his or her attention to the side of the vehicle.

For example, Japanese Patent Application Laid-Open No. 2015-136056 discusses an apparatus that uses a sensor such as a radar to perform processing for detecting another vehicle in the proximity range of a vehicle and then displays a narrow-angle image from a camera on a digital mirror monitor if another vehicle is not detected and displays a wide-angle image from the camera on the digital mirror monitor if another vehicle is detected.

With the technique discussed in Japanese Patent Application Laid-Open No. 2015-136056, for example, if a camera capable of capturing 180 degrees on the side of the vehicle (from the front traveling direction to the rear direction of the vehicle) is used as a side camera, and a peripheral vehicle is detected on the front side of the camera, a camera's video image having an excessively wide angle may be displayed to display the detected vehicle.

In such a case, an image in the vehicle's rear direction to be checked may be displayed small due to the wide-angle display, and visibility in checking the rear of the vehicle, which is the primary purpose of the door mirrors, may decrease.

### SUMMARY OF THE INVENTION

The present invention is directed to providing a camera system that suppresses reduction of visibility in checking a rear of a vehicle using a digital mirror and also appropriately displays a detected object on a monitor.

According to a first aspect of the present invention, there is provided a camera system as specified in claims 1 to 14. According to a second aspect of the present invention, there is provided a method for controlling a camera system as specified in claim 15. According to a third aspect of the present invention, there is provided a computer program as specified in claim 16.

Further features of the present invention will become apparent from the following description of embodiments with reference to the attached drawings.

### BRIEF DESCRIPTION OF THE DRAWINGS

Fig. 1 is a diagram illustrating a configuration of a vehicle including imaging units according to a first embodiment.
Fig. 2 is a block diagram illustrating a configuration of a camera system according to the first embodiment.
Fig. 3 is a block diagram illustrating internal configurations of each of the imaging units, a processing unit, and an integration processing unit according to the first embodiment.
Figs. 4A and 4B are diagrams illustrating an example of an image captured by one of the imaging units and an image displayed on a display unit according to the first embodiment.
Fig. 5 is a flowchart illustrating processing performed by the processing unit according to the first embodiment.
Fig. 6 is a flowchart illustrating processing performed by the integration processing unit according to the first embodiment.
Fig. 7 is a diagram illustrating an example of areas defined in the captured image according to the first embodiment.
Figs. 8A and 8B are diagrams illustrating an example of an object detected in a visible area and an image displayed on the display unit according to the first embodiment.
Figs. 9A and 9B are diagrams illustrating an example of an object detected in a rear blind spot area and an image displayed on the display unit according to the first embodiment.
Figs. 10A and 10B are diagrams illustrating an example of an object detected in a front blind spot area and an image displayed on the display unit according to the first embodiment.
Fig. 11 is a block diagram illustrating a configuration of a camera system according to a second embodiment.
Figs. 12A, 12B, and 12C are diagrams illustrating an example of the object detected in the front blind spot area and images displayed on display units according to the second embodiment.

### DESCRIPTION OF THE EMBODIMENTS

Embodiments of the present invention will be described below with reference to the drawings. Each of the embodiments of the present invention described below can be implemented solely or as a combination of a plurality of the embodiments or features thereof where necessary or where the combination of elements or features from individual embodiments in a single embodiment is beneficial.

A first embodiment of the present invention will be described.

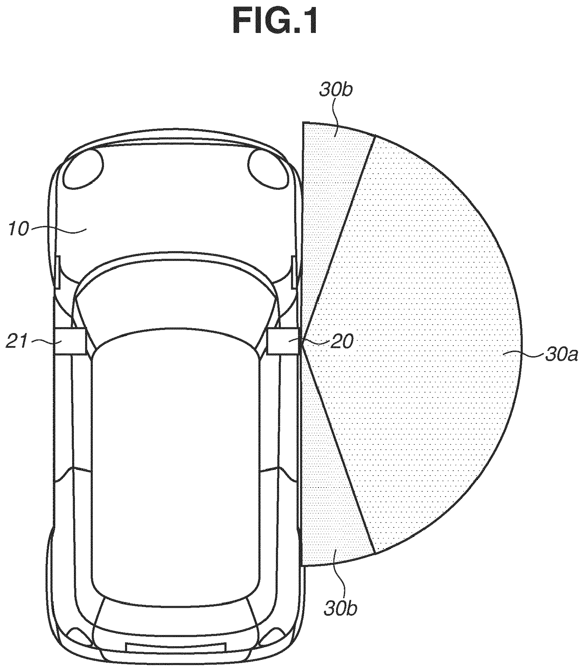

Fig. 1 is a diagram illustrating a vehicle 10 as a moving object in which imaging units 20 and 21 according to the present embodiment are installed. As illustrated in Fig. 1, the vehicle 10 includes the imaging units 20 and 21 as side cameras that capture images of the surroundings of the vehicle 10. The imaging units 20 and 21 have similar configurations, and imaging areas thereof will thus be described using the imaging unit 20 as an example.

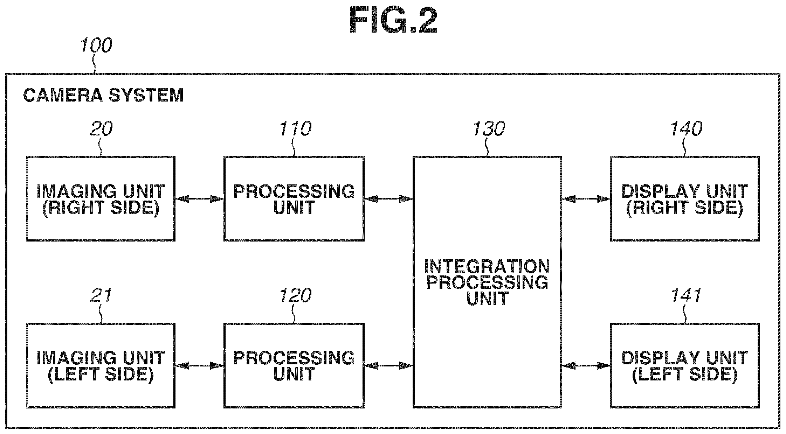

In the present embodiment, the imaging unit 20 has an imaging range with a viewing angle of about 180 degrees. The imaging range of the imaging unit 20 is divided into an imaging range 30a and an imaging range 30b. Particularly, the imaging range 30b schematically indicates an area where images can be acquired at a high resolution due to the properties of an optical system of the imaging unit 20. As illustrated in Fig. 1, each of the imaging unit 20 and 21 as the side cameras can acquire images at a higher resolution in a peripheral viewing angle area indicated by the imaging range 30b and away from the optical axis at the center of the viewing angle than in the imaging range 30a. Thus, the imaging units 20 and 21 can capture images in the left and right rear direction of the vehicle 10, which is the direction corresponding to the function of door mirrors and usually checked by the driver, at a high resolution. The captured images are displayed on display units 140 and 141 (see Fig. 2) included in the vehicle 10, and the driver of the vehicle 10 views the displayed images, thereby checking the left and right sides and left and right rear sides of the vehicle 10.

Fig. 2 is a block diagram illustrating an example of a configuration of a camera system 100 according to the present embodiment. The camera system 100 includes the imaging units 20 and 21, processing units 110 and 120, an integration processing unit 130, and the display units 140 and 141.

Each of the integration processing unit 130 and the processing units 110 and 120 includes a central processing unit (CPU) (not illustrated) that performs calculations and control. Each of the integration processing unit 130 and the processing units 110 and 120 also includes a read-only memory (ROM) and a random-access memory (RAM) (which are not illustrated) as main storage devices. The ROM stores basic setting data and a camera processing program according to the present embodiment. The CPU reads a computer program corresponding to processing from the ROM, loads the computer program into the RAM, and performs the operations of the blocks.

The imaging unit 20 captures images of the right side, right front side, and right rear side of the vehicle 10 as a substitute for a right door mirror. The processing unit 110 is connected to the imaging unit 20, and mainly performs video processing and object detection processing (which will be described in detail below) based on the images captured by the imaging unit 20. The processing unit 110 is also connected to the integration processing unit 130, controls the imaging unit 20 based on information received from the integration processing unit 130, and transmits results of the processing performed based on the images captured by the imaging unit 20 to the integration processing unit 130.

The imaging unit 21 captures images of the left side, left front side, and left rear side of the vehicle 10 as a substitute for a left door mirror. The processing unit 120 is connected to the imaging unit 21 and the integration processing unit 130 and performs various types of processing based on the images captured by the imaging unit 21. The function of the processing unit 120 is similar to that of the processing unit 110.

The display unit 140, such as a liquid crystal display, mainly receives and displays the image of the right rear side of the vehicle 10 captured by the imaging unit 20 and processed by the processing unit 110 and the integration processing unit 130. Thus, the display unit 140 is a display unit serving as a substitute for the right door mirror. The display unit 141 mainly receives and displays the image of the left rear side of the vehicle 10 captured by the imaging unit 21 and processed by the processing unit 120 and the integration processing unit 130. Thus, the display unit 141 is a display unit serving as a substitute for the left door mirror.

The integration processing unit 130 is connected to the processing units 110 and 120 and the display units 140 and 141 and performs integrative processing (camera system control) on the entire camera system 100. In the present embodiment, the integration processing unit 130 mainly edits the images captured by the imaging unit 20 or 21 and transmits the edited images to the display unit 140 or 141.

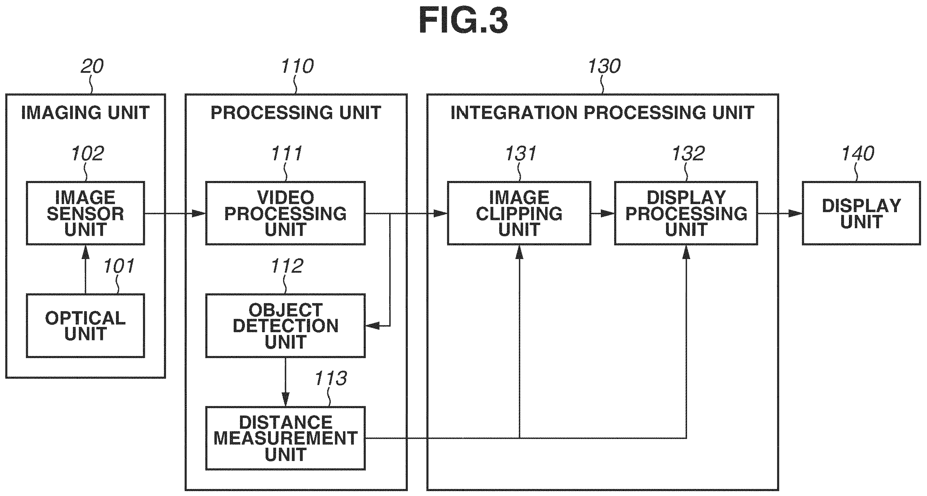

Next, with reference to Fig. 3, internal processing by the imaging unit 20, the processing unit 110, and the integration processing unit 130 will be described in detail. Internal processing by the imaging unit 21 and the processing unit 120 is similar to that by the imaging unit 20 and the processing unit 110, and thus the description thereof will be omitted.

The imaging unit 20 will be described first. The imaging unit 20 includes an optical unit 101 that forms optical subject images (optical images) from external light. The optical unit 101 uses a combination of a plurality of lenses to form the images at two different viewing angles. More specifically, the optical unit 101 has an optical property of forming a high-resolution optical image in the peripheral viewing angle area away from the optical axis and forming a low-resolution optical image in a narrow viewing angle area near the optical axis. The optical images formed by the optical unit 101 are then input to an image sensor unit 102.

The image sensor unit 102 includes, for example, a complementary metaloxide-semiconductor (CMOS) image sensor or a charge-coupled device (CCD) image sensor. Such an image sensor has a light receiving surface as a photoelectric conversion area on a photoelectric conversion element, and the optical images are photoelectrically converted into an electric signal (an electrical signal) on the light receiving surface. The electric signal generated by the image sensor is converted into a predetermined image signal inside the image sensor unit 102, and the image signal is output to the processing unit 110 at the subsequent stage.

The processing unit 110 will be described next. A video processing unit 111 develops the image signal transmitted from the imaging unit 20 into a video image and performs processing, such as wide dynamic range (WDR) correction, gamma correction, lookup table (LUT) processing, and distortion correction, on the video image. This processing makes the video image more visible when the video image is displayed on the display unit 140, and also improves the detection rate of the object detection processing internally performed by an object detection unit 112 (described below). The image signal processed by the video processing unit 111 is input to the object detection unit 112 and an image clipping unit 131 included in the integration processing unit 130.

The object detection unit 112 performs the object detection processing using the image signal output from the video processing unit 111 and determines whether an object such as a vehicle or a person is in the image. To detect an object, deep learning is used. For example, it is desirable to use You Only Look Once (YOLO) that enables easy learning and fast detection, as deep learning. As another type of deep learning, Single Shot MultiBox Detector (SSD) or Faster Region-based Convolutional Neural Network (R-CNN) can be used. Alternatively, Fast R-CNN or R-CNN can be used. The object detection result includes four-point coordinate information that is the coordinates of the four vertices of a rectangle (a bounding box) indicating the position where an object is detected, and object name information indicating the classification of the detected object. Alternatively, the object detection unit 112 can learn images of a person and a vehicle in advance using deep learning, thereby classifying the detected object as a person, a vehicle, or any other type based on the image signal output from the video processing unit 111. The object detection unit 112 can also classify the detected object as an object likely to come into contact with the vehicle 10 or an object unlikely to come into contact with the vehicle 10. The object detection unit 112 can also classify the detected object as a movable object or a still object (e.g., a structure). For example, the object detection unit 112 learns images of a person and a pole in advance using deep learning, associates the person in advance with the movable object, and associates the pole in advance with the still object.

Then, a distance measurement unit 113 calculates the distance from the vehicle 10 to the object detected by the object detection unit 112. As the distance measurement method, for example, there is a method for setting width information regarding the width of a detected object such as a vehicle in advance and estimating the distance using a ratio based on the number of pixels corresponding to the width of the detected object in the image, the set width information, and information regarding the imaging range of the imaging unit 20. As another method, a method for analyzing information regarding the blur of the image of the detected object using deep learning to calculate a value of the distance can be used. Together with the object detection result by the object detection unit 112, distance information regarding the distance to the object estimated by the distance measurement unit 113 is output to the integration processing unit 130 at the subsequent stage.

The integration processing unit 130 will be described next. While the integration processing unit 130 performs the integrative processing on the entire camera system 100, the processing related to the present embodiment will mainly be described.

The image clipping unit 131 receives the image signal transmitted from the video processing unit 111 and performs clipping processing on the image signal. In the clipping processing, the image clipping unit 131 clips an image of the right rear side from the image signal captured by the imaging unit 20 for a purpose similar to that of the right door mirror. At this time, the image clipping unit 131 also receives the object detection result and the distance information as the distance measurement result from the distance measurement unit 113 of the processing unit 110. The image clipping unit 131 changes how to clip an image from the image signal based on the object detection result and the distance measurement result. How to clip an image from the image signal is changed, for example, so that the detected object can be displayed. In this processing, how to clip an image from the image signal is changed in a plurality of patterns based on the type or position of the detected object, and the details will be described below. The image clipped by the image clipping unit 131 is output to a display processing unit 132.

The display processing unit 132 generates an image to be displayed on the display unit 140. The display processing unit 132 generates, for example, a display image corresponding to the display resolution of the display unit 140 based on the image signal received from the video processing unit 111 of the processing unit 110.

The display unit 140 is a display unit of a digital mirror serving as a substitute for the right door mirror and basically displays the video image of the right rear side clipped by the image clipping unit 131 from the image captured by the imaging unit 20 serving as the right side camera.

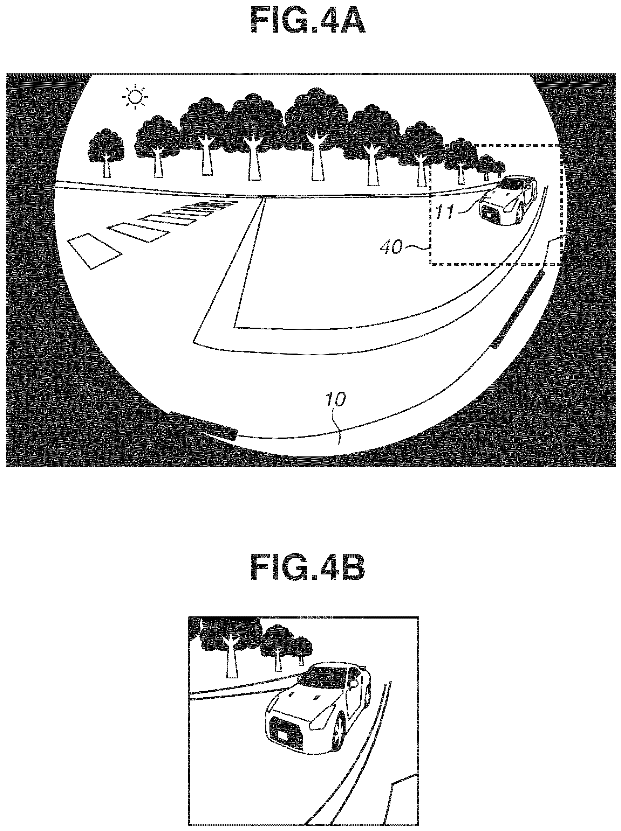

Figs. 4A and 4B illustrate an example of the display image. Fig. 4A illustrates an example of the image captured by the imaging unit 20 serving as the right side camera. As described above with reference to Fig. 1, the imaging unit 20 has the imaging range with a viewing angle of about 180 degrees. In the example of Fig. 4A, the right side of the vehicle 10 from the front to the rear is widely captured. The imaging unit 20 also has a characteristic capable of acquiring images at a high resolution in the peripheral viewing angle area away from the optical axis due to the properties of the optical system of the imaging unit 20.

Fig. 4A also illustrates a clipping area 40 as an example of an area to be clipped by the image clipping unit 131. The image clipping unit 131 basically performs an operation of clipping an image of a right rear side area, as a substitute for the right door mirror. Fig. 4B illustrates the clipped image. The clipped image is displayed on the display unit 140. Consequently, the driver of the vehicle 10 views the image on the display unit 140 serving as a substitute for the right door mirror and thereby can check the side rear of the vehicle 10. In the case of the present embodiment, a rear area of an adjacent lane is clipped, and another vehicle 11 running in the rear area of the adjacent lane is displayed. The present embodiment illustrates an example of a case where no particular object is detected in the surrounding area of the vehicle 10 other than the clipping area 40 by the object detection processing.

The display processing unit 132 also receives the object detection result and the distance measurement result from the distance measurement unit 113 of the processing unit 110, edits the image received from the image clipping unit 131 based on the object detection result, and changes the display image. If a warning is to be given with the display image, the display processing unit 132 combines a warning image with the display image. For example, if an object is detected around the vehicle 10, the display processing unit 132 determines to give a warning. Consequently, in a case where an object to be paid attention to by the driver is present around the vehicle 10, it is possible to appropriately notify the driver of a warning. An example of the warning image will be described below with an example of the object detection. Alternatively, the image clipping unit 131 can have the function of the display processing unit 132.

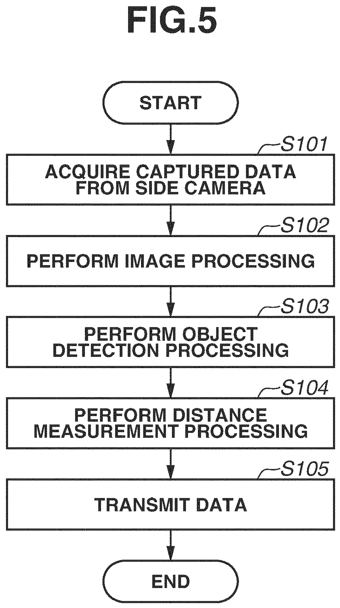

Fig. 5 is a flowchart illustrating an example of camera system processing performed by the processing unit 110. The CPU (not illustrated) in the processing unit 110 reads the program corresponding to the processing from the ROM, loads the program into the RAM, and performs this flowchart. It does not matter whether the vehicle 10 is in a running state or a stopped state when the flowchart is performed. The flowchart is constantly performed while the engine is operating.

In step S101, the processing unit 110 controls the imaging unit 20 serving as the right side camera of the vehicle 10. Particularly, the processing unit 110 sets and controls the image sensor unit 102 appropriately to acquire captured data. It is thus possible to acquire captured data of the right side of the vehicle 10 as illustrated in Fig. 4A.

In step S102, the processing unit 110 controls the video processing unit 111 to perform various types of image processing on the image signal of the captured data and develop the image signal into a video image which is easily visible and in which an object can be easily detected. While the present embodiment is described using an image having distortion due to the properties of the optical system as illustrated in Fig. 4A, the video processing unit 111 can generate an image in which distortion is removed through distortion correction, and the generated image can be handled at the subsequent stage.

In step S103, the processing unit 110 controls the object detection unit 112 to perform the object detection processing using the image processed by the video processing unit 111. This enables, if an object is present in the surrounding area of the vehicle 10 in the image as illustrated in Fig. 4A, detecting the position and type of the object.

In step S104, the processing unit 110 controls the distance measurement unit 113 to calculate the distance from the vehicle 10 to the object detected by the object detection unit 112. This enables determining whether the detected object is near or far from the vehicle 10. By utilizing the value of the distance, the integration processing unit 130 at the subsequent stage can perform control to divide processing based on the closeness of the detected object to the vehicle 10.

In step S105, the processing unit 110 transmits data of the image signal processed by the video processing unit 111 to the integration processing unit 130 at the subsequent stage. The processing unit 110 also transmits data of the object detection result by the object detection unit 112 (including the coordinate information regarding the bounding box and the object name information indicating the classification of the object) and the distance information regarding the distance to the object calculated by the distance measurement unit 113 to the integration processing unit 130 at the subsequent stage. The object detection result and the distance information transmitted in this processing have contents obtained by the processing using the image signal transmitted at the same time. In other words, the image signal is transmitted on a frame-by-frame basis, and the data is transmitted in a state where the frame of the image signal and the frame of the object detection result and the distance information match each other.

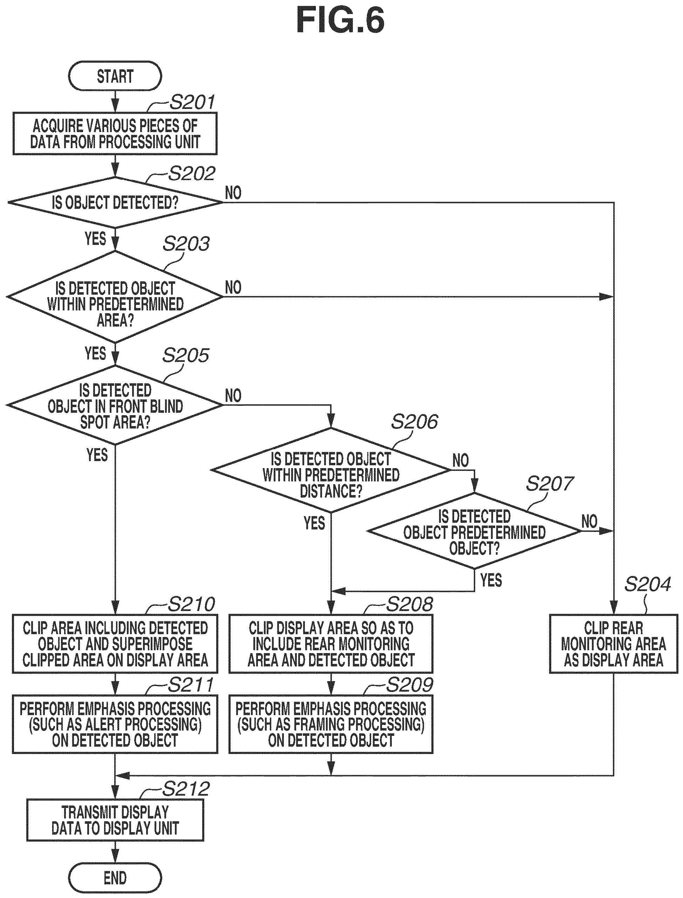

Fig. 6 is a flowchart illustrating an example of camera system processing performed by the integration processing unit 130. The CPU (not illustrated) in the integration processing unit 130 reads the program corresponding to the processing from the ROM, loads the program into the RAM, and performs this flowchart. It does not matter whether the vehicle 10 is in a running state or a stopped state when the flowchart is performed. The flowchart is constantly performed while the engine is operating.

In step S201, the integration processing unit 130 receives the image signal, the object detection result, and the distance information regarding the distance to the detected object, from the processing unit 110 at the previous stage. These are pieces of information in the same common frame as described above. The received various pieces of data are used to control how to clip an image using the image clipping unit 131 and control the display content using the display processing unit 132 in the integration processing unit 130.

In step S202, the integration processing unit 130 refers to the received object detection result and determines whether an object is detected. If an object is detected (YES in step S202), the processing proceeds to step S203. If no object is detected (NO in step S202), the processing proceeds to step S204.

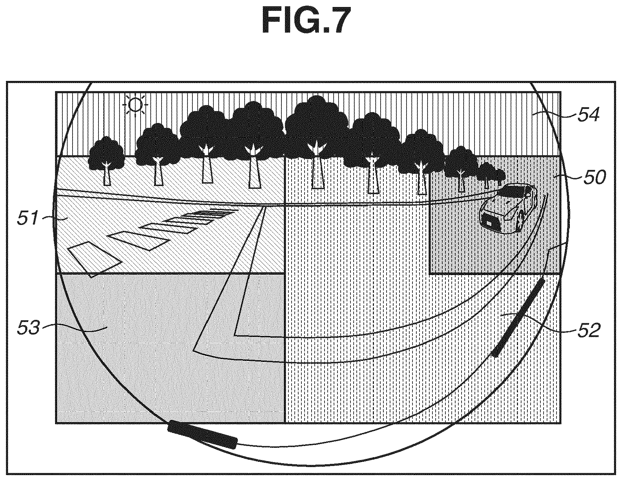

In step S203, the integration processing unit 130 refers to the coordinate information indicating the position in the received object detection result and determines whether the detected object is within a predetermined area of the received image signal. The predetermined area at this time will be described with reference to Fig. 7. Fig. 7 illustrates the image signal received from the processing unit 110 and also illustrates a state where the image is divided into areas. More specifically, the areas include a rear monitoring area 50 indicating the right rear side of the vehicle 10. In other words, the rear monitoring area 50 indicates a direction corresponding to the function of the door mirrors and usually checked by the driver. The areas also include a visible area 51 indicating a direction that the driver of the vehicle 10 can visually check from the driver's seat. The rear monitoring area 50 and the visible area 51 can be collectively referred to as a non-blind spot area. The areas also include a rear blind spot area 52 as a blind spot area that the driver of the vehicle 10 is unable to visually check from the driver's seat, and indicates a blind spot in the rear direction close to the rear monitoring area 50. The rear blind spot area 52 is a lower rear portion of the viewing angle of the imaging unit 20. The areas also include a front blind spot area 53 in front of the center of the viewing angle, as a blind spot area that the driver of the vehicle 10 is unable to visually check from the driver's seat and indicates a blind spot in the front direction far from the rear monitoring area 50. The front blind spot area 53 is an area below the door window next to the driver's seat and is a blind spot area that the driver of the vehicle 10 is unable to visually check from the driver's seat through the door window. The front blind spot area 53 is a lower front portion of the viewing angle of the imaging unit 20. The areas also include a non-target area 54 indicating a direction from the vehicle 10 to the sky. The non-target area 54 can thus be excluded from targets of an area to be displayed on the display unit 140 and an area where an object is to be detected. How to divide the image into areas is determined in advance by a user or the camera system 100.

In a case where an optical system having the imaging range with a viewing angle of about 180 degrees is used in the imaging unit 20 serving as the right side camera as described above, the rear monitoring area 50 corresponding to the function of the door mirrors is the peripheral viewing angle area. In a case where the optical system further has a property capable of forming an optical image at a high resolution in the peripheral viewing angle area away from the optical axis, the rear monitoring area 50 corresponds to a high-resolution area. Thus, if this area is displayed on the display unit 140, the driver can satisfactorily check the rear monitoring area 50. On the other hand, the area near the center of the viewing angle is a low-resolution area and corresponds to, for example, the rear blind spot area 52 as in the present embodiment. However, the driver is to pay attention to a blind spot area around the vehicle 10, and it is less important to check a blind spot area far from the vehicle 10. Thus, even if the area near the center of the viewing angle is a low-resolution area, an issue is less likely to arise.

If the detected object extends over a plurality of areas, the grounding position of the object can be calculated, and the determination can be made based on which of the areas includes the grounding position.

In the present embodiment, the predetermined area in step S203 indicates an entire blind spot area in which the rear blind spot area 52 and the front blind spot area 53 are combined. More specifically, if the object is detected in the rear monitoring area 50 that the driver of the vehicle 10 can check on the display unit 140 or in the visible area 51 that the driver of the vehicle 10 can visually check (NO in step S203), the processing proceeds to step S204. If the object is detected in the blind spot area (YES in step S203), the processing proceeds to step S205. In a case where a plurality of objects is detected in a plurality of areas, if at least one of the objects is detected in the blind spot area, the processing proceeds to step S205.

If the object is detected in the non-target area 54, the detection result is ignored and is not reflected in this determination processing.

In step S204, the integration processing unit 130 controls the image clipping unit 131 to clip the rear monitoring area 50 as a display area, thereby generating an image to be displayed on the display unit 140 using the display processing unit 132. This processing is processing for generating a display image in a case where no object is detected in the captured image data or in a case where no object is detected within the predetermined area. In the example of Fig. 4A described above, another vehicle 11 is present in the rear monitoring area 50, and thus Fig. 4A illustrates an example where no object is present in the blind spot area. Thus, the clipping area 40 described with reference to Figs. 4A and 4B and the rear monitoring area 50 clipped in this step are similar to each other. Thus, in step S204, an image is clipped as described above with reference to Figs. 4A and 4B.

In step S205, the integration processing unit 130 determines whether the detected object is in the front blind spot area 53. If the detected object is in the front blind spot area 53 which is far from the rear monitoring area 50 (YES in step S205), the processing proceeds to step S210. If the detected object is not in the front blind spot area 53 but in the rear blind spot area 52 which is close to the rear monitoring area 50 (NO in step S205), the processing proceeds to step S206.

In step S206, the integration processing unit 130 refers to the distance information regarding the distance to the object received from the processing unit 110 at the previous stage, and determines whether the distance to the detected object is less than or equal to a predetermined threshold (a predetermined distance). For example, the integration processing unit 130 determines whether the detected object is within predetermined meters from the vehicle 10. If the integration processing unit 130 determines that the detected object is within the predetermined distance (YES in step S206), the processing proceeds to step S208. If the integration processing unit 130 determines that the detected object is away from the vehicle 10 beyond the predetermined distance (NO in step S206), the processing proceeds to step S207.

In step S207, the integration processing unit 130 refers to the object name information indicating the classification of the object received from the processing unit 110 at the previous stage, and determines whether the detected object is a predetermined object. In the present embodiment, the predetermined object refers to an obstacle that can come into contact with the vehicle 10, such as a person, a motorcycle, or an automobile. If the detected object is the predetermined object (YES in step S207), the processing proceeds to step S208. If the detected object is not the predetermined object (NO in step S207), the processing proceeds to step S204. More specifically, if the detected object is away from the vehicle 10 beyond the predetermined distance and is not the predetermined object, the processing of step S204 is performed. If the detected object is close to the vehicle 10 within the predetermined distance, or if the detected object is away from the vehicle 10 beyond the predetermined distance but is the predetermined object to be paid attention to, the processing of step S208 is performed.

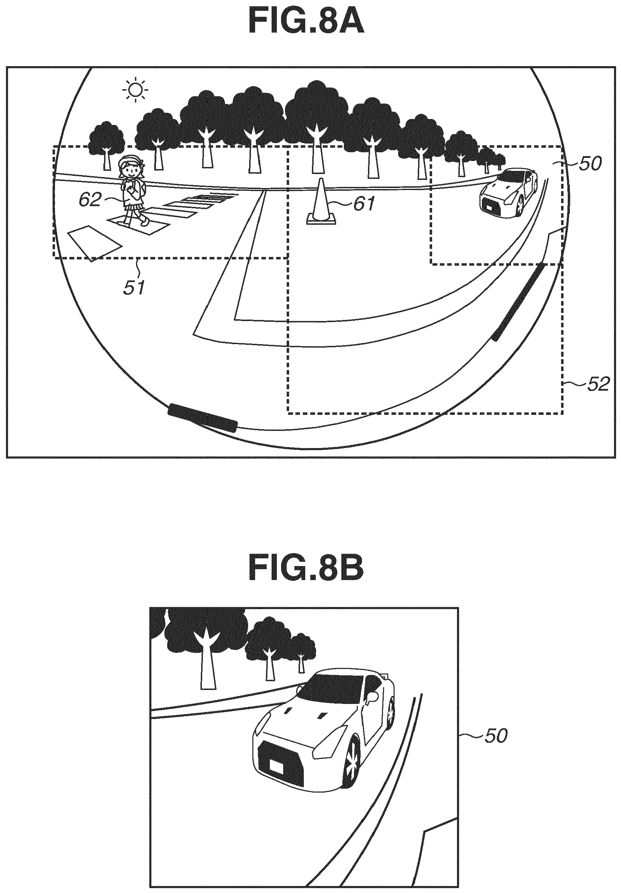

With reference to Figs. 8A and 8B, the processing for branching to step S204 will be described supplementarily. Fig. 8A illustrates the image signal received from the processing unit 110 and also illustrates a state where the object detection is performed in the image. In Fig. 8A, a color cone^{®} 61 and a person 62 are included in the areas other than the rear monitoring area 50 in the image. Regarding the person 62, the determination result of whether an object is detected in step S202 is YES, but the determination result of whether the detected object is within the predetermined area in step S203 is NO because the person 62 is included in the visible area 51 in the image. Thus, the processing of step S204 is performed. Regarding the color cone^{®} 61, the determination result of whether the detected object is within the predetermined area in step S203 is YES because the color cone^{®} 61 is included in the rear blind spot area 52 in the image. In the example of Fig. 8A, it is assumed that the color cone^{®} 61 is detected at a position away from the vehicle 10 beyond the predetermined distance, and a color cone is not the predetermined object to be paid attention to. Thus, the processing proceeds to step S207, the determination result in step S207 is NO, and the processing of step S204 is performed. As a result, the image clipping unit 131 performs the operation of clipping the rear monitoring area 50, as a substitute for the right door mirror, and the display image generated by the display processing unit 132 is as illustrated in Fig. 8B.

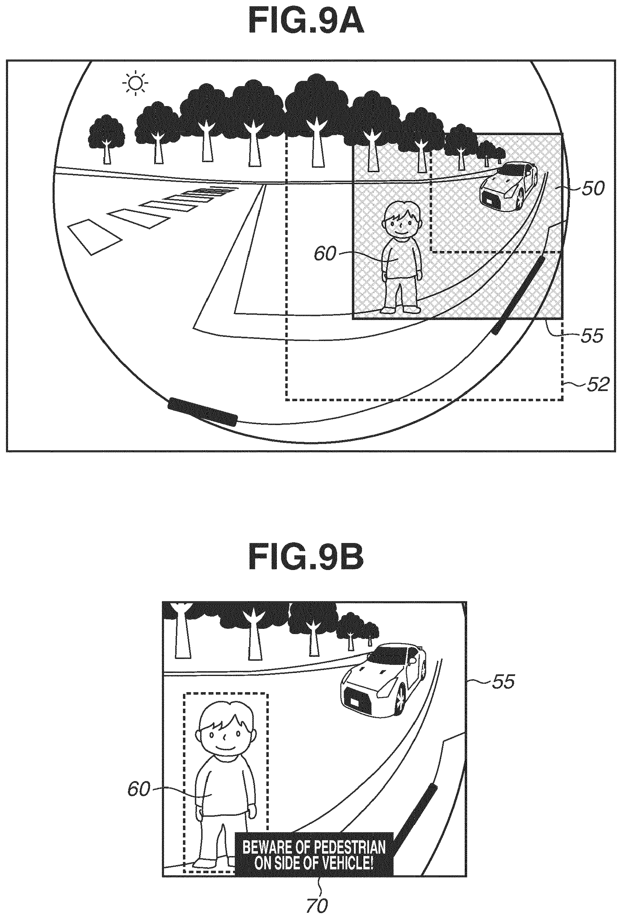

In step S208, the integration processing unit 130 controls the image clipping unit 131 to perform processing for clipping an image area from the received image signal so as to include the rear monitoring area 50 and the detected object. This processing is processing for generating a display image in a case where an object is detected in the rear blind spot area 52 in the image signal and in a case where the detected object is within the predetermined distance or the detected object is away from the vehicle 10 beyond the predetermined distance but is the predetermined object. This processing will be described with reference to Figs. 9A and 9B.

Fig. 9A illustrates the image signal received from the processing unit 110 and also illustrates a state where the object detection is performed in the image. In Fig. 9A, a person 60 is included in an area other than the rear monitoring area 50 in the image. Regarding the person 60, the determination result of whether an object is detected in step S202 is YES, and the determination result of whether the detected object is within the predetermined area in step S203 also YES because the person 60 is included in the rear blind spot area 52 in the image. Then, if the person 60 is detected within the predetermined distance, the processing of step S208 is performed. Even in a case where the person 60 is not detected within the predetermined distance, if a person is the predetermined object, the determination result in step S207 is YES and the processing of step S208 is performed. In step S208, the integration processing unit 130 clips a clipping area 55 including the rear monitoring area 50 and the person 60 as the detected object from the original image signal using the image clipping unit 131.

In step S209, the display processing unit 132 generates a display image using an image of the clipping area 55 obtained in step S208. In this processing, since the detected object is displayed in the clipping area 55, the display processing unit 132 performs emphasis processing on the detected object. Fig. 9B illustrates an example of the emphasis processing. In the example of Fig. 9B, the display processing unit 132 performs framing processing on the person 60 as the detected object, using the coordinate information regarding the bounding box included in the object detection result. In the framing processing, a frame line is drawn in the image to surround the person 60. Using the object name information indicating the classification of the object included in the object detection result, alert text 70 is also generated and displayed in a superimposed manner on the image. Such a display image is generated by the display processing unit 132 and displayed on the display unit 140, whereby the driver of the vehicle 10 can quickly identify what type of object is present at which position around the vehicle 10, and quickly determine how to drive carefully to ensure safety.

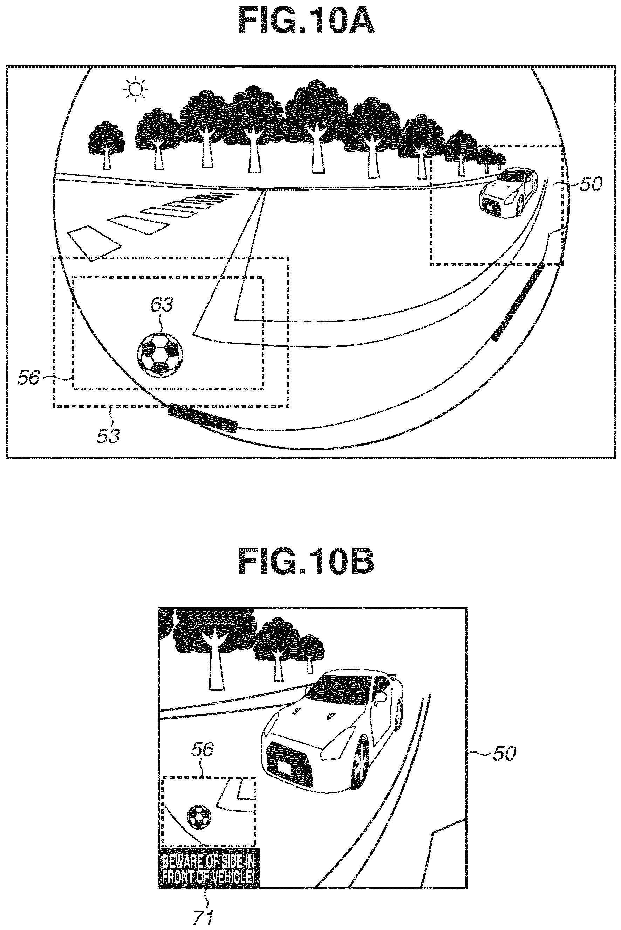

In step S210, the integration processing unit 130 controls the image clipping unit 131 to perform processing for separately clipping the rear monitoring area 50 and an area including the detected object from the received image signal and combining images of the clipped areas for display. This processing is processing for generating a display image in a case where the object is detected in the front blind spot area 53 in the image signal. As illustrated in Fig. 7, the front blind spot area 53 is an area below the visible area 51 and at a close distance from the vehicle 10. In this processing, control based on the classification of the object or the distance to the object can also be performed. The processing will be described with reference to Figs. 10A and 10B.

Fig. 10A illustrates the image signal received from the processing unit 110 and also illustrates a state where the object detection is performed in the image. In Fig. 10A, a ball 63 is included in an area other than the rear monitoring area 50 in the image. Regarding the ball 63, the determination result of whether an object is detected in step S202 is YES, and the determination result of whether the detected object is within the predetermined area in step S203 is also YES because the ball 63 is included in the front blind spot area 53 in the image. The processing of step S210 is then performed. In step S210, the integration processing unit 130 clips a clipping area 56 including the ball 63 as the detected object as well as the rear monitoring area 50 from the original image signal using the image clipping unit 131. The integration processing unit 130 then performs processing for enlarging or reducing an image of the clipping area 56 as appropriate, and combines the resulting image with an image of the rear monitoring area 50 clipped separately, thereby generating a combined image.

In step S211, the display processing unit 132 generates a display image using the combined image generated in step S210. In this processing, since the detected object is displayed in the clipping area 56, the display processing unit 132 performs alert processing on the detected object. Fig. 10B illustrates an example of the alert processing. In the example of Fig. 10B, processing for reducing the clipping area 56 including the ball 63 as the detected object is performed, and the reduced clipping area 56 is combined with a lower left portion of the image. A frame dotted line in Fig. 10B indicates the reduced clipping area 56 and is drawn to clarify the combined image area. Alert text 71 is also generated using the position information regarding the position where the object is detected, and is displayed in a superimposed manner on the image. Such a display image is generated by the display processing unit 132 and displayed on the display unit 140, whereby the driver of the vehicle 10 can achieve both checking the rear of the vehicle 10 instead of using the door mirrors and ensuring safety by paying attention to the object around the vehicle 10.

At this time, if the object detected in the front blind spot area 53 is displayed using a method similar to the method for displaying the object detected in the rear blind spot area 52 that has been described in step S208, the image in the rear direction to be checked is made small. Consequently, the visibility in checking the rear instead of using the door mirrors can decrease. On the other hand, if an object is detected at a position close to the rear direction to be checked, displaying the object using the method in step S208 enables the driver to quickly identify the position of the object and ensure safety. In this manner, how to clip an image is changed as in steps S208 and S210 based on the object detection result, whereby it is possible to offer the driver the value of achieving both the appropriate identification of the position of a detected object and the visibility in checking the rear of the vehicle 10.

In step S212, the integration processing unit 130 transmits the image generated by the display processing unit 132 to the display unit 140. Consequently, the display image generated using one of the methods in steps S204, S209, and S211 is displayed on the display unit 140.

The flowchart then ends. Through the flowchart, the method for displaying a display image on the display unit 140 is appropriately switched based on the object detection result, whereby the driver of the vehicle 10 can achieve both the appropriate identification of the position of a detected object and the visibility in checking the rear of the vehicle 10.

According to the present embodiment, if an object is detected using an imaging unit as a side camera, it is possible to appropriately display the detected object on a monitor without reducing visibility in checking a rear of a vehicle. Consequently, a driver of the vehicle can achieve both checking the rear of the vehicle and ensuring safety around the vehicle.

In the first embodiment, the description has been given of the method for, if an object is detected in the front blind spot area 53, generating a combined image by combining an image of the detected object with an image of the rear monitoring area 50 and displaying the combined image on the display unit 140 serving as a substitute for the right door mirror. In a second embodiment, a case will be described where the image of the detected object is displayed on a unit other than the display unit 140 serving as a substitute for the right door mirror.

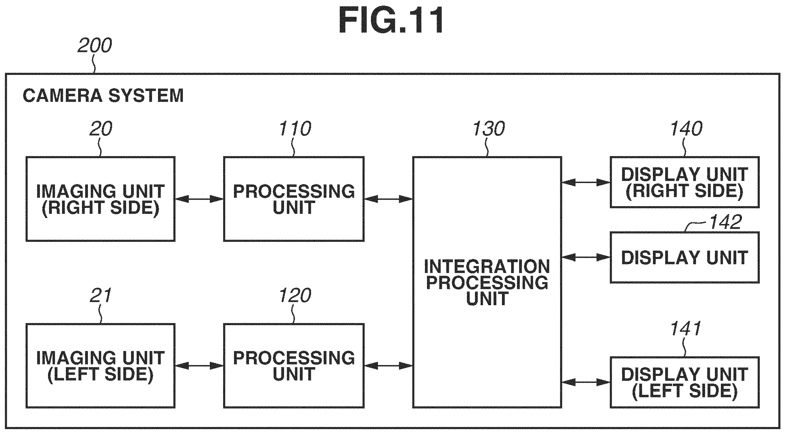

Fig. 11 is a block diagram illustrating an example of a configuration of a camera system 200 according to the present embodiment. The camera system 200 includes the imaging units 20 and 21, the processing units 110 and 120, the integration processing unit 130, the display units 140 and 141, and a display unit 142. The camera system 200 according to the present embodiment is similar to the camera system 100 according to the first embodiment, except that the display unit 142 is connected to the integration processing unit 130. Thus, the display processing unit 132 of the integration processing unit 130 according to the present embodiment is configured to output a display image to the display unit 142.

Similarly to the first embodiment, the display units 140 and 141 are mainly used as the display units of the digital mirror monitors for the side cameras (the imaging units 20 and 21) serving as substitutes for the left and right door mirrors, and thus the camera system 200 includes the plurality of display units 140 and 141.

The display unit 142 is a display unit other than those of the digital mirror monitors serving as substitutes for the door mirrors. The display unit 142 is, for example, a liquid crystal monitor displaying the state of the vehicle 10 (e.g., a fuel consumption history and air conditioner information) or a monitor for an automotive navigation system. In the case of a vehicle in which a liquid crystal monitor displays various meters of an instrument panel, the display unit 142 can be such a liquid crystal monitor.

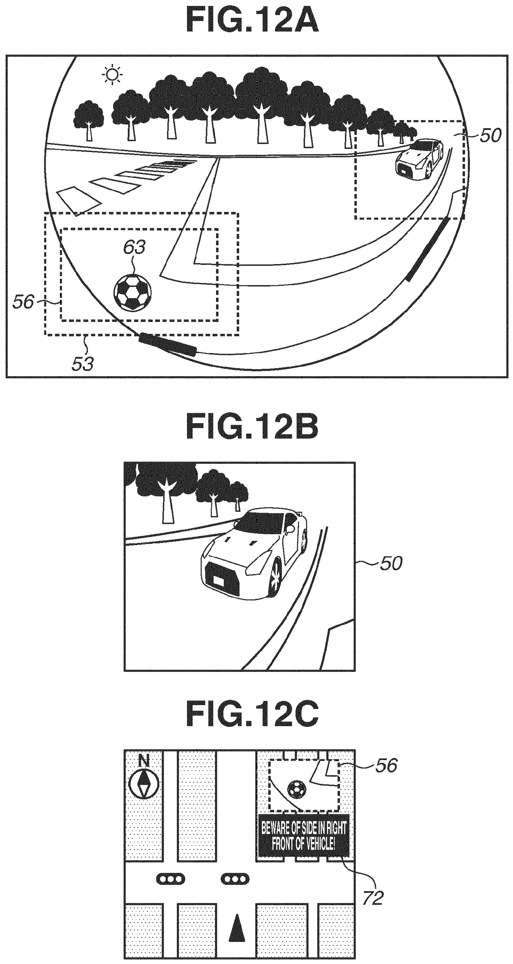

Next, with reference to Figs. 12A to 12C, an operation as a feature according to the present embodiment will be described. This operation is processing for generating a display image according to the present embodiment in a case where an object is detected in the front blind spot area 53 in the image signal illustrated in Fig. 7 in the first embodiment. As illustrated in Fig. 7, the front blind spot area 53 is a blind spot area in the front direction that is below the visible area 51 and at a close distance from the vehicle 10.

Fig. 12A illustrates the image signal received from the processing unit 110 and also illustrates a state where the object detection is performed in the image. In the example of Fig. 12A, the ball 63 is included in the front blind spot area 53 in the image. As processing in this case, processing corresponding to steps S210 and S211 in the flowchart illustrated in Fig. 6 in the first embodiment is performed. Thus, the processing to be performed instead of steps S210 and S211 in the present embodiment will now be described.

In the present embodiment, the integration processing unit 130 clips the clipping area 56 including the ball 63 as the detected object as well as the rear monitoring area 50 from the original image signal using the image clipping unit 131. The integration processing unit 130 then performs processing for enlarging or reducing an image of the clipping area 56 as appropriate, and stores the resulting image separately from a clipped image of the rear monitoring area 50.

Then, the display processing unit 132 transmits the clipped image of the rear monitoring area 50 and the clipped image of the front blind spot area 53 (the image of the clipping area 56) to different display units. More specifically, the display processing unit 132 transmits the clipped image of the rear monitoring area 50 to the display unit 140 of the digital mirror monitor serving as a substitute for the right door mirror. The display unit 140 displays the image as illustrated in Fig. 12B, and the driver can check the rear side through the display unit 140 instead of using the right door mirror. The display processing unit 132 also transmits the image of the clipping area 56 in the front blind spot area 53 to the display unit 142. In the present embodiment, the display unit 142 is the monitor for the automotive navigation system. Thus, the display processing unit 132 generates a combined image by combining the clipped image of the front blind spot area 53 in which the detected object is displayed (the image of the clipping area 56) with an image for the automotive navigation system. The display processing unit 132 further generates alert text 72 for the combined image using the position information regarding the position where the object is detected, superimposes the alert text 72 on the combined image, and transmits the resulting image to the display unit 142. Consequently, the display unit 142 displays the image as illustrated in Fig. 12C, whereby the driver can identify the position of the object around the vehicle 10.

Since the display method described with reference to Figs. 12A to 12C corresponds to steps S210 and S211 in the flowchart illustrated in Fig. 6 according to the first embodiment, the method for displaying a display image is switched based on the object detection result also in the case of the present embodiment, similarly to the first embodiment. For example, if an object is detected in the rear blind spot area 52, similarly to the first embodiment, the display method in step S208 or S204 is used. If an object is detected in the front blind spot area 53, the display method described with reference to Figs. 12A to 12C is used.

According to the present embodiment, if an object is detected in the front blind spot area 53, unlike the first embodiment, it is possible to display the detected object without affecting image display on the display unit 140 corresponding to the function of the door mirrors. The driver can thus appropriately identify the detected object. Consequently, the driver can achieve both checking the rear of the vehicle 10 and ensuring safety around the vehicle 10 without reducing the visibility in checking the rear.

While the embodiments of the present invention have been described in detail above, the present invention is not limited to these specific embodiments. The embodiments of the present invention also include various forms without departing from the spirit and scope of the invention. Parts of the above-described embodiments can be appropriately combined together.

The embodiments of the present invention can be implemented not only by an information processing apparatus but also by performing the following processing.

Software (a program) for implementing the functions according to the above-described embodiments is supplied to a system or an apparatus via a network for data communication or various storage media, and a computer (or a CPU or a microprocessor unit (MPU)) of the system or the apparatus reads and executes the program. Alternatively, a computer-readable storage medium storing the program can be provided.

According to the embodiments of the present invention, it is possible to provide a camera system that suppresses reduction of visibility in checking a rear of a vehicle using a digital mirror and also displays a detected object appropriately on a monitor.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)TM), a flash memory device, a memory card, and the like.

While the present invention has been described with reference to embodiments, it is to be understood that the invention is not limited to the disclosed embodiments. The scope of the following claims is to be accorded the broadest interpretation so as to encompass all such modifications and equivalent structures and functions.

## Claims

1. A camera system (100) comprising:
imaging means (20, 21) for capturing an image of a side of a vehicle (10);
clipping means (131) for clipping, from the captured image, a side rear area (50) of the vehicle (10) that is a part of the captured image;
display means (140, 141) for displaying an image of the side rear area of the vehicle; and
detection means (112) for detecting an object (60, 63) in a blind spot area (52, 53) of the vehicle that is a part of the captured image and is determined in advance,
wherein the clipping means (131) is further configured to clip a clipping area (55, 56) from the captured image so as to include an area where the object (60. 63) is detected,
wherein the camera system (100) further comprises generation means (132) for generating a display image based on the side rear area of the vehicle and the clipping area, and
wherein the display means (140, 141) is further configured to display the display image.

2. The camera system (100) according to claim 1, wherein the imaging means (20, 21) includes an optical system (101) configured to capture an image having a higher resolution at a periphery of a center of a viewing angle than at the center of the viewing angle.

3. The camera system (100) according to claim 1, wherein in a case where the detection means (112) does not detect the object, the clipping means (131) is configured to clip the side rear area (50) of the vehicle, and the display means (140, 141) is configured to display the image of the side rear area (50) of the vehicle.

4. The camera system (100) according to claim 1, wherein in a case where the detection means (112) detects the object (63) in a front blind spot area (53) in front of a center of a viewing angle in the blind spot area, the clipping means (131) is configured to clip the side rear area (50) of the vehicle and the clipping area including the detected object (63), and the generation means (132) is configured to generate the display image by combining the side rear area (50) of the vehicle and the clipping area including the detected object (63).

5. The camera system (100) according to claim 4, wherein in a case where the detection means (112) detects the object (60) in a rear blind spot area (52) behind the front blind spot area in the blind spot area, the clipping means (131) is configured to clip the clipping area so as to include the side rear area (50) of the vehicle and the detected object (60).

6. The camera system (100) according to claim 5,
wherein the rear blind spot area (52) includes an area of the center of the viewing angle and an area of a lower rear portion of the viewing angle in the captured image, and
wherein the front blind spot area (53) is an area of a lower front portion of the viewing angle in the captured image.

7. The camera system (100) according to claim 1, wherein the clipping means (131) is configured to clip the clipping area based on a distance from the imaging means (20, 21) to the object (60, 63) that is detected by the detection means (112).

8. The camera system (100) according to claim 1, wherein in a case where a value of a distance from the imaging means (20, 21) to the object (60, 63) that is detected by the detection means (112) is less than or equal to a predetermined threshold, the clipping means (131) is configured to clip the clipping area.

9. The camera system (100) according to claim 8,
wherein the detection means (112) is further configured to detect classification of the object (60, 63), and
wherein the clipping means (131) is configured to clip the clipping area based on the classification of the object.

10. The camera system (100) according to claim 9, wherein the detection means (112) is trained in advance by input of an image corresponding to the classification to the detection means (112), and is configured to detect the classification of the object based on the captured image.

11. The camera system (100) according to any one of claims 8 to 10,
wherein in a case where the value of the distance from the imaging means (20, 21) to the object (60, 63) is greater than the predetermined threshold, the detection means (112) is configured to detect whether the object is an object likely to come into contact with the vehicle (10), and
wherein in a case where the detection means (112) detects the object (60, 63) as the object likely to come into contact with the vehicle, the clipping means (131) is configured to clip the clipping area.

12. The camera system (100) according to claim 11, wherein the detection means (112) is configured to classify the object as a movable object that is the object likely to come into contact with the vehicle or a still object.

13. The camera system (100) according to claim 9,
wherein the detection means (112) is further configured to detect object name information indicating the classification of the object, and
wherein the generation means (132) is configured to combine the object name information with the display image.

14. The camera system (100) according to claim 1,
wherein the camera system (100) includes a plurality of the display means (140, 141, 142), and
wherein in a case where the detection means (112) detects the object in a front blind spot area in front of a center of a viewing angle in the blind spot area, the clipping means (131) is configured to separately clip the side rear area of the vehicle and the clipping area including the detected object to display each of the image of the side rear area of the vehicle (10) and an image of the clipping area including the detected object on a different one of the plurality of display means.

15. A method for controlling a camera system (100), the method comprising:
capturing an image of a side of a vehicle (10);
clipping, from the captured image, a side rear area (50) of the vehicle that is a part of the captured image;
displaying an image of the side rear area (50) of the vehicle (10);
detecting an object (60, 63) in a blind spot area of the vehicle (10) that is a part of the captured image and is determined in advance;
clipping a clipping area from the captured image so as to include an area where the object (60, 63) is detected;
generating a display image based on the side rear area (50) of the vehicle and the clipping area (55, 56); and
displaying the display image.

16. A computer program that when executed on a computer causes the computer to control each means of the camera system according to any one of claims 1 to 14.
